# EUROPEAN PATENT APPLICATION

(11) **EP 1 293 922 A1**
(43) Date of publication of application: **19.03.2003**
(21) Application number: 02078786.7
(22) Date of filing: 13.09.2002
(51) Int. Cl.: G06F 17/60

(54) **Arrangement and method for supporting temporary replacement**

(30) Priority: 14.09.2001 NL 1018961; 18.03.2002 NL 1020188
(71) Applicant: Berk, Peter Paul Alexander, 8016 GR Zwolle (NL)
(72) Inventor: Berk, Peter Paul Alexander, 8016 GR Zwolle (NL)
(74) Representative: Jorritsma, Ruurd

(57) **Abstract**

Arrangement for supporting temporary replacement of a key worker, including a processing unit and memory means, the processing unit being connected to the memory means wherein the memory means contain a first database and a second database, which first database contains first records containing first data on an organisation that wishes to take out insurance for supporting temporary replacement of the key worker, the first data at least including: a profile for a temporary replacement for a worker to be insured, and which second database contains second records containing second data on candidates avilable as temporary replacement; and
the processing unit is equiped to carry out the following steps:
- comparing the profile with the second records in the second database;
- calculating a replacement index for the probability that one or more candidates who match the profile will be available as temporary replacement at a future point in time;
- depending on the value of the replacement index, determining whether the worker to be insured can be accepted for insurance.

## Description

The present invention relates to an arrangement for supporting temporary replacement of a key worker, comprising a processing unit and memory means, the processing unit being connected to the memory means.

The long-term absence of a worker in a key job can give rise to major problems in the day-to-day management of an organisation. Specifically, such a worker in a key job ("key worker"), such as , for example, a director, a director/proprietor, sales manager, controller, production manager, (departmental) head, specialist (for example employed in information technology or research and development) or a member of the professions, has a relatively large amount of influence on the day-to-day management. Also, the term "key worker"may relate to a different type of worker. When he/she becomes incapacitated for work, this fact may strongly effect the continuation of day-to-day work in a company or organisation, as is the case, for example, for a medical receptionist, a dentist's assistent, a welder for certified welding applications, a teacher or instructor or generally, an, in a certain way specially skilled worker. The organisation can suffer severe damage if such a worker is not available for a prolonged period because of health reasons or is no longer available as a consequence of permanent incapacity for work or death.

If the worker is unexpectedly unable to come into work and a (speedy) return cannot be expected, the organisation will usually try to find a (temporary) replacement only at that point in time. However, it will usually take some time before a suitable candidate is found. Moreover, as a result of this fact there will also be appreciable pressure to restrict the time taken so as, as far as possible, to limit the damage caused by the absence of the worker: this can have an adverse effect on selection of the most suitable candidate possible.

In addition, the temporary replacement will also be associated with appreciable costs. Such costs comprise, for example, both searching for a replacement candidate, working in the candidate, the candidate's salary/remuneration and also the damage to the company that possibly occurs.

In practice, the appointment of temporary replacements does take place in a number of cases but suffers from the abovementioned disadvantages. Specifically, existing arrangements comprise no more than a database of potential temporary replacements, it being necessary to look for a suitable (if possible most suitable) temporary replacement at the point in time when a temporary replacement is actually needed, when the key worker to be replaced is absent and thus (usually) is unable to make a contribution.

One aim of the present invention is to provide an arrangement of the type mentioned in the preamble that supports the process of temporary replacement in the preliminary phase and during implementation and does do better than is the case in the state of the art.

A further aim of the invention is to provide an arrangement by means of which the process of appointing a temporary replacement can be appreciably accelerated and is associated with more certainty and proceeds in accordance with predetermined procedures.

In order to achieve the abovementioned objective, the present invention provides an arrangement for supporting temporary replacement of a key worker of the type mentioned in the preamble, characterised in that
the memory means contain a first database and a second database, which first database contains first records containing first data on an organisation that wishes to take out insurance for supporting temporary replacement of the key worker, the first data at least comprising: a profile for a temporary replacement for a worker to be insured, and which second database contains second records containing second data on candidates available as temporary replacement; and
the processing unit is equipped to carry out the following steps:
- comparing, in accordance with predetermined rules, the profile with the second records in the second database;
- calculating, on the basis of the comparison, a replacement index that indicates the degree of probability that one or more candidates who match the profile will be available as temporary replacement at a future point in time;
- depending on the value of the replacement index, determining whether the worker to be insured can be accepted for insurance for supporting temporary replacement of the key worker.

By means of the present invention the search procedure for a possible candidate is completed at an earlier stage than at the point in time when the worker is unable to come into work, i.e. at a point in time when the key worker is still able him- or herself to assist in drawing up the "ideal" solution for temporary replacement, that is to say the desired type of temporary replacement and also the profile of the potential replacement.

The arrangement according to the present invention thus has the advantage that an accurate comparison test with potentially available candidates can be carried out and that the arrangement is able to report whether there is possibly an adequate number of candidates available as temporary replacement.

Furthermore, the arrangement according to the present invention has the advantage that, if necessary, management of the company can be continued as quickly as possible, the costs being appreciably lower than when an ad hoc solution has to be used to find a suitable candidate as temporary replacement for the key worker. On the one hand, the damage to the organisation is limited and, on the other hand, the present invention makes provision that the costs will be predictable, controllable and matched to (the wishes and/or financial resources of) the organisation.

In addition, the present invention has the advantage that the selection of a candidate in no way whatsoever needs to be taken under the pressure of time because as a result of the search procedure carried out in advance there is certainty that, if necessary, a suitable person can be available as a temporary replacement.

The present invention also has the advantage that a period after which the potential replacement would be able to take over the tasks can be established in advance.

Since both the number of available temporary candidates, their distribution according to characteristics to be differentiated, such as, for example, sector and experience, and also the number of key workers to be insured and the distribution of these workers according to the characteristics to be differentiated can be subject to change in the course of time, a further aim of the present invention is to be able to provide, at any desired point in time, a report on the degree of coverage of the obligations undertaken, that is to say the probability, considered at a level of aggregation, that one or more candidates will be available as temporary replacement at a future point in time.

To this end the present invention relates to an arrangement as described above, characterised in that the processing unit is equipped to carry out the following steps on request or at a predetermined point in time:
- for each key worker accepted for the insurance:
   - reading in the profile associated with the insurance and stored in the agreement file;
   - comparison, in accordance with predetermined rules, of the stored profile with the second records in the second database;
   - calculation, on the basis of the comparison, of a replacement index that indicates the degree of probability that one or more candidates who match the profile will be available as temporary replacement at a future point in time; and then
- at each level of aggregation, calculating and displaying a coverage index that indicates the extent to which the second records in the second database provide availability, at a future point in time, of candidates as temporary replacement at that level of aggregation.

Proactive monitoring is achieved in this way: the value of the coverage index gives, at a level of aggregation, the availability of candidates as temporary replacement at that point in time. The level of aggregation that is considered can be, for example, a sector, a type of company or a type of employee, but, for example, also according to type of insurance. On the basis of this it is possible, for example, to adjust the number of candidates included in the second database as potential temporary replacements in order to ensure that coverage of the commitments (at the level of aggregation) is and remains adequate.

A best match is not yet carried out in the stage described above; the likelihood of a possibility of a match at a later point in time (when the key worker is unable to come into work) is determined.

For the possible later match the present invention relates to an arrangement as described above, characterised in that the processing unit is equipped to carry out the following steps:
- input of a sick note from a key worker to be insured, containing medical report data relating to the nature of the illness;
- comparison of the medical report data with agreement conditions stored earlier at the time of acceptance, a calculation being carried out to determine whether the sick note falls within the agreement conditions,
- compilation of a best match selection list of candidates available as temporary replacement who fit the profile for a temporary replacement for the key worker to be insured, by comparing the profile with the second records in the second database and selecting matching second records.

The present invention furthermore relates to a method for supporting temporary replacement of a key worker, to be carried out by an arrangement as described above, characterised in that
a first database contains first records containing first data on an organisation that wishes to take out insurance for supporting temporary replacement of a key worker, the first data at least comprising: a profile for a temporary replacement for a key worker to be insured, and a second database contains second records containing second data on candidates available as temporary replacement;
and the method comprises the following steps:
- comparing, in accordance with predetermined rules, the profile with the second records in the second database;
- calculating, on the basis of the comparison, a replacement index that indicates the degree of probability that one or more candidates who match the profile will be available as temporary replacement at a future point in time;
- depending on the value of the replacement index, determining whether the worker to be insured can be accepted for insurance for supporting temporary replacement of a key worker.

The present invention furthermore relates to a computer program for supporting temporary replacement of a key worker, to be implemented by an arrangement as described above, that, when the program has been loaded in the memory means of the arrangement, enables the processing unit to support temporary replacement, characterised in that
the memory means comprise a first database and a second database, which first database contains first records containing first data on an organisation that wishes to take out insurance for supporting temporary replacement of a key worker, the first data at least comprising: a profile for a temporary replacement for a key worker to be insured, and which second database contains second records containing second data on candidates available as temporary replacement; and
the processing unit carries out the following steps:
- comparing, in accordance with predetermined rules, the profile with the second records in the second database;
- calculating, on the basis of the comparison, a replacement index that indicates the degree of probability that one or more candidates who match the profile will be available as temporary replacement at a future point in time;
- depending on the value of the replacement index, determining whether the worker to be insured can be accepted for insurance for supporting temporary replacement of a key worker.

Finally, the present invention relates to a data carrier provided with the computer program as described above.

The invention will be explained in more detail below with reference to a few drawings in which illustrative embodiments thereof are shown. They are intended exclusively for illustrative purposes and not to restrict the inventive concept, which is defined by the claims.

In the drawings:
Figure 1 shows a computer system of the arrangement according to the present invention;
Figure 2 shows a diagrammatic layout of records in a first database for use in the computer system according to the present invention;
Figure 3 shows a diagrammatic layout of records in a second database for use in the computer system according to the present invention;
Figure 4 shows a diagrammatic flowchart for a method of the computer system according to the present invention during an acceptance phase;
Figure 5 shows a diagrammatic flowchart for a method of the computer system according to the present invention during an implementation phase.

The present invention relates to a computer system and associated method for support in the case of temporary replacement of a key worker. With this system an organisation obtains "insurance" for temporary replacement of the key worker if, at a given point in time, the key worker is unable to come into work on health grounds and a "speedy" return cannot be expected.

It is pointed out that the term "insurance", as used here, in this context can relate to an insurance agreement with an insurance company, but in general can also relate to a guarantee (or guarantee agreement), the purpose of which is the continuity of the organisation. The present invention enables not only insurance companies but also organisations such as interim management bureaus, employment agencies, insurance agents or financing agencies such as banks and investment companies, to support temporary replacement of a key worker.

The computer system of the present invention supports the temporary replacement of a key worker in the acceptance and offer phase and in the implementation phase.

The organisation that wishes to take out insurance must supply data for this purpose. These data are needed to compile the offer and the support agreement and are also used in candidate selection. Even during the acceptance and offer phase the company obtains the assurance that suitable candidates whose profile matches the replacement desired by the company can be available.

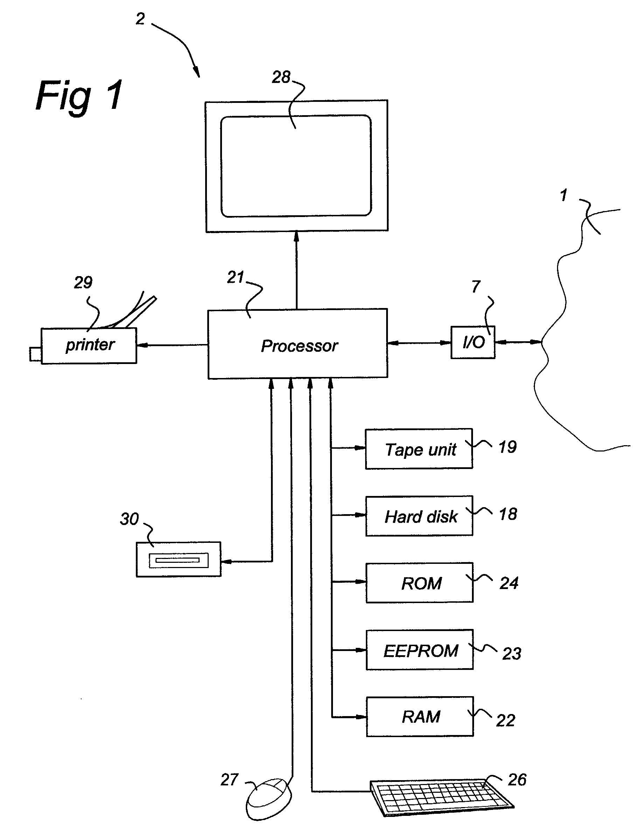

Figure 1 shows a block diagram of a central computer system of the arrangement according to the present invention. A central computer system 2 comprises a central processing unit 21 with peripherals. The central processing unit 21 is connected to memory means 18, 19, 22, 23, 24 which store instructions and data, one or more reader units 30 (for reading, for example, floppy discs, CD-ROMs and DVDs, etc.), a keyboard 26 and a mouse 27 as input devices, and a monitor 28 and a printer 29 as output devices. It is possible both for other input units, such as a trackball, a barcode reader, a scanner and a touch screen, and for other output devices to be provided.

The central processing unit 21 is also provided with a network adapter 7 for data communication with a network 1. The network adapter 7 is connected to the network 1. The network can comprise a large number of networks connected to one another, such as, for example, the Public Switched Telephone Network (PSTN) or any other network that is suitable for data communication. For example, such networks connected to one another can be a local area network (LAN) or a wide area network (WAN). Other computer systems (of which one personal computer 31 is shown), are connected to the network 1, which other systems are able to communicate with the central computer system 2 via that connection. Such other computer systems, such as personal computer 31, are equipped in a similar manner to the central computer system 2 with input means, such as keyboard and mouse, memory means and reader units, and output units, such as monitor and printer.

The memory means shown in Figure 1 comprise RAM 22, (E)PROM 23, ROM, tape unit 19 and hard disk 18. However, more and/or other memory units can be provided, as will be clear to a person skilled in the art. Furthermore, if necessary, one or more units of these can be located remotely from the central processing unit 21.

The central processing unit 21 is shown as a single unit, but can also comprise various processing units which work in parallel or are controlled by one central unit, it being possible for the processing units to be located remotely from one another, as will be known to persons skilled in the art.

As will be explained below, the memory means 18, 19, 22, 23, 24 contain databases for, on the one hand, data relating to the company that is taking out insurance and, on the other hand, data relating to candidates who can possibly act as temporary replacement. A first database DB1 contains records which each contain data on a company. A second database DB2 contains records which each contain data on a candidate temporary replacement.

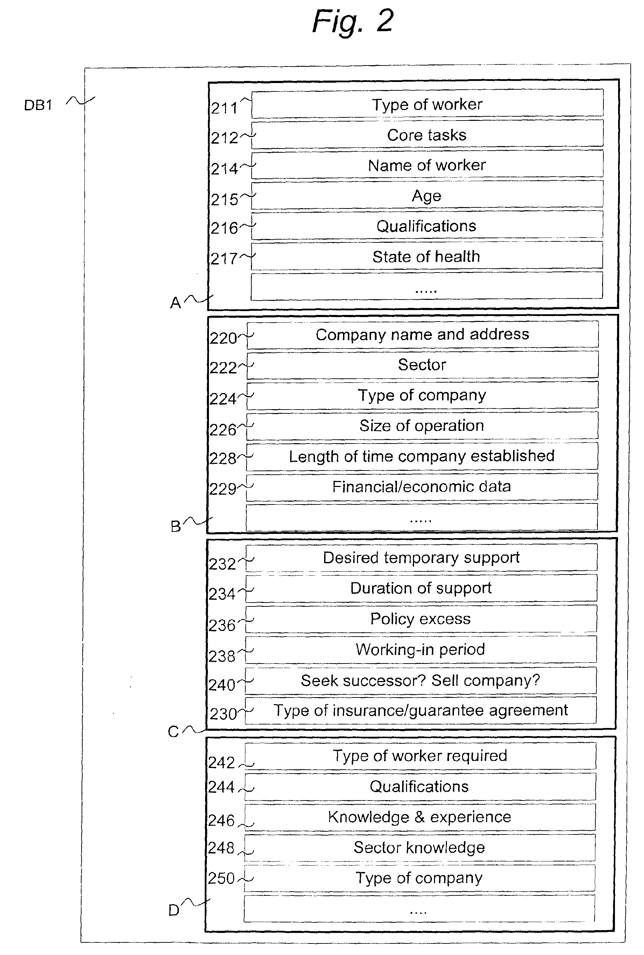

Figure 2 shows a diagrammatic layout of a record in a first database DB1 for use in the computer system according to the present invention.

The first database (DB1) contains the records of organisations (and companies) which (wish to) take out insurance for support in the case of temporary replacement of a key worker. A record for an organisation contains data fields that hold the necessary data with regard to the insurance. A record is, for example, subdivided into characteristics A of a key worker to be insured, characteristics B of the organisation, characteristics C of the desired insurance or guarantee, and a profile D for a temporary replacement.

Within the characteristics A relating to the key worker, the data fields hold a field for the type of worker 211, his or her core tasks 212, the personal details of the worker, such as name 214, age 215, and qualifications 216. The personal details also comprise data fields 217 in which data on the state of health of the worker are recorded. These data fields 217 are possibly provided with a predetermined coding for describing the state of health. These data 217 comprise the medical aspects that are of importance to be able to establish an insurance risk for replacement of the worker to be insured.

The characteristics B of the organisation comprise the data fields which relate to the type of organisation. A data field 220 holds the name (and address data) of the organisation. Data field 222 holds the sector in which the organisation operates, for example, profit/non-profit/professional. Furthermore, data field 224 holds data on the type of organisation, for example, manufacturing, trading or service. Data field 226 holds the size of the organisation (given by, for example, the number of employees, or an economic index). Data field 228 holds the number of years the organisation has been established. In addition, the organisation characteristics B can contain data with regard to, for example, the type of products/services, distribution, focus on the domestic and/or foreign markets and the market in which the company operates. Finally, the organisation characteristics B also contain data fields 229 which relate to the financial/economic situation of the organisation, such as profitability and solvency during a specific previous period, and liquidity. Data on, for example, a reorganisation or suspension of payments are also stored here. The (financial) data in the organisation characteristic B also serve to establish the insurance risk.

The characteristics C of a desired insurance or guarantee comprise the data which describe which type of insurance the organisation desires. For example, insurance can be desired for temporary support in the case of long-term illness, death, permanent incapacity for work or as a consequence of an accident.

The characteristics C comprise: data field 230 that indicates the type of insurance or guarantee, data field 232 for the desired temporary support (for example number of days per week), data field 234 for the total support period (for example 6, 9 or 12 months) and data field 236 for the policy excess. Other data 238 within this characteristic C can be insurance of the working-in period and the length of the insured working-in period. In the case of death and incapacity for work, data 240 on insurance for searching for a successor can also be included here, or in the case of death or permanent incapacity for work of a director/proprietor, (responsibility for or supervision of) the sale of the organisation or the company.

Finally, the record in the database DB1 contains the profile D for a temporary replacement in a number of fields. This profile D comprises a data field 242 for the type of worker that is required, a data field 244 for the desired qualifications of the required temporary replacement, a data field 246 for desired specific knowledge or experience (for example in sales, finance, production, general management, etc.), a data field 248 to indicate knowledge of a sector and a data field 250 to indicate the type of organisation within which management know-how and experience or a different type of know-how and experience, is desired (for example production company, trading organisation, service organisation, non-profit organisation, etc.).

It is, of course, possible for yet further data fields to be provided within a record in the database DB1 in order further to define the characteristics A, B, C, and D.

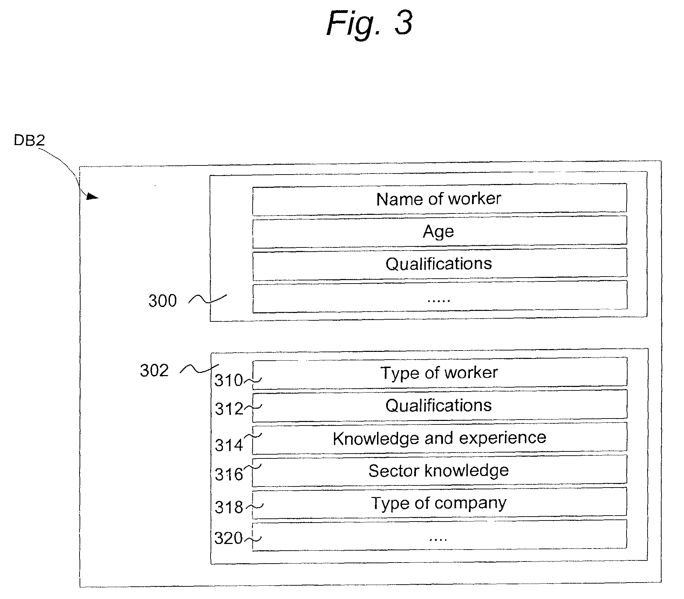

Figure 3 shows a diagrammatic layout of a record in a second database DB2 for use in the computer system according to the present invention. The second database DB2 serves for storing records in which data on candidate temporary managers are recorded. Such a record contains data fields 300 in which the personal details of a candidate are recorded. In addition, the record contains the job profile 302 of the candidate. This job profile contains a data field 310 for type of worker, a data field 312 for the qualifications of the candidate, a data field 314 for the specific knowledge or experience of the candidate (for example in sales, finance, production, general management, etc.), a data field 316 for the candidate's knowledge of a sector and a data field 318 to indicate the type of company within which management know-how and experience or a different type of know-how and experience, has been gained. Furthermore, the record can contain a data field 320 that indicates the weekly availability (for example number of days per week) of the candidate.

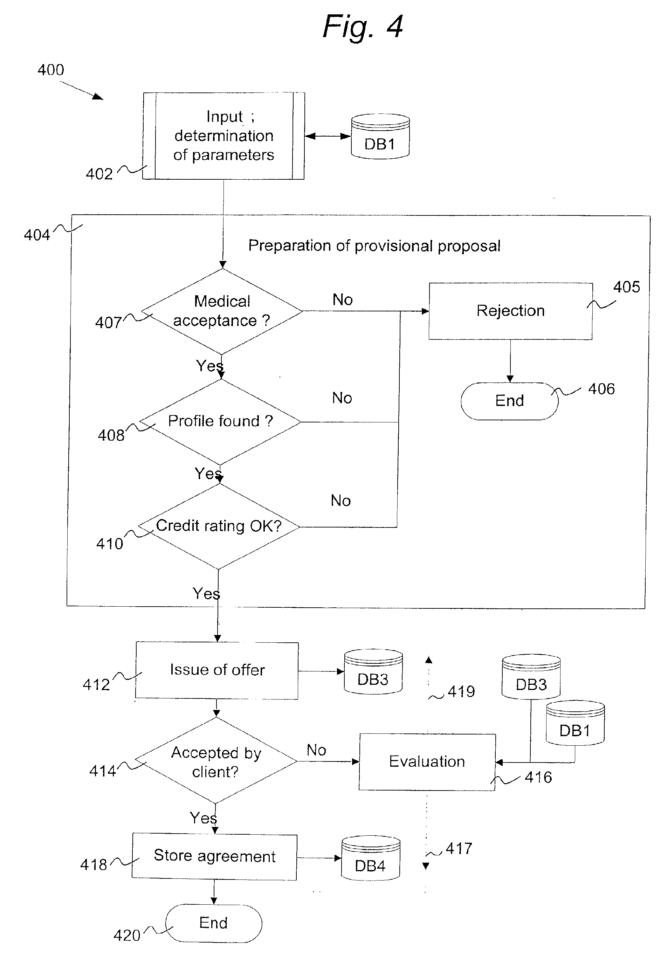

Figure 4 shows a diagrammatic flowchart for a method of the computer system according to the present invention during an offer and acceptance phase. This phase is reached after an organisation has applied for support in the case of temporary replacement of a key worker and the data on the organisation have been entered as a record in the database DB1. A procedure by means of which the computer system establishes whether or not the organisation will be accepted for the offered insurance/guarantee for support is shown diagrammatically in Figure 4. On acceptance, a more detailed calculation of the risk is also carried out and an offer issued in this procedure.

In step 402, a record from the database DB1 is read in by the processing unit 21. A number of parameters which are representative of the characteristics A related to the worker, the organisation characteristics B, the desired insurance C and the profile D for the required temporary replacement are determined successively.

In procedure 404, processing unit 21 establishes whether the parameters determined indicate that a provisional proposal may be prepared. During this operation the processing unit 21 establishes the degree of probability that indicates whether one or more candidates who match the profile (D) will be available as temporary replacement at a future point in time.

In step 407, the parameters determined for the characteristics A related to the worker are used by the processing unit 21 to carry out an analysis that calculates a health index on the basis of a health reference value, the health index giving the insurance risk with regard to the health of the key worker to be insured. The health index can, for example, indicate a rejection, a medical examination or medical acceptance as the result.

The processing unit 21 establishes whether the calculated health index for the characteristics A related to the worker allows medical acceptance. If this is the case the procedure continues in step 408. In the other case the procedure continues in step 405, where the processing unit 21 will specify rejection or more detailed medical examination in a report.

In step 405, the processing unit carries out a rejection procedure, a report being prepared in which it is stated that the application for insurance/guarantee for support is rejected or that a more detailed examination is needed. The procedure 400 then terminates in step 406.

In step 408, the profile D for the required temporary manager is compared by the processing unit 21 with the stored data on possible temporary replacements in DB2 in accordance with rules stored in one of the memories 18, 19, 22, 23, 24, 26. A replacement index that is established here indicates to what extent profile D matches one or more of the data on temporary managers in database DB2. The replacement index thus indicates whether a temporary replacement that may be required is possible, that is to say whether one or more suitable candidates will be available as temporary replacement. As will be known to those skilled in the art, the degree to which the profile D corresponds to the data for each candidate can be established by indicating reference values.

The establishment of whether a temporary replacement can be available is essential and determines whether any insurance at all can be possible. Specifically, in some cases the profile D can describe a worker who is so specific with highly specialised core tasks that the probability of the future availability of a suitable replacement is too low. The replacement index calculated by the processing unit 21 will then be below a predetermined value and the processing unit 21 will decide that the insurance/guarantee for support cannot be concluded.

If one or more suitable candidates are available, the procedure continues in step 410. If this is not the case, the procedure continues in step 405, where the processing unit 21 will prepare a report indicating the lack of suitable candidates.

In step 410, the processing unit 21 calculates an organisation index from the organisation characteristics B on the basis of a company reference value, which organisation index shows the financial/economic status (i.e.: the credit rating) of the organisation. The length of time the organisation has been established is also of importance here (i.e.: is the company concerned, for example, a start-up company, which may have a higher risk profile). On the basis of this status the organisation index can, for example, indicate that as far as the organisation characteristic B is concerned acceptance, exclusion or a more detailed accountants declaration can be applicable. The processing unit 21 establishes whether the calculated organisation index with regard to the credit rating for the organisation characteristics B allows acceptance. If this is the case the procedure continues in step 412. If it is not the case, the procedure continues in step 405, the reasons for the rejection being on the grounds of the financial/economic status of the organisation. It may be indicated here whether a more detailed accountants investigation has to be carried out before the application can be accepted.

In step 412, an offer is calculated by the processing unit 21 on the basis of the characteristics C for the desired insurance/guarantee for support, which offer also takes into account the (indices of the) characteristics A, B and D in the record.

The offer is calculated by considering all risk factors. In this way a suitable offer is obtained in which any partial adjustments or exclusions on the basis of characteristics A, B and D can be incorporated. A health risk can, for example, give rise to a partial exclusion or the application of a higher premium, for example in the case where the key worker to be replaced is unable to come into work because of stress and this person has twice before suffered from a prolonged period of stress in a preceding period. The financial situation (B) of the organisation can also give rise to an amended offer, if, for example, an organisation with marginal profitability can require more extensive temporary support (by incorporating longer term presence of a temporary replacement, or a temporary replacement with higher qualifications, in the offer). The profile D desired by the organisation for a temporary replacement can also be incorrect in relation to the other characteristics in the application record. In this case the offer can also show a proposal adapted to this. It is also possible that there is very little likelihood that a suitable temporary replacement will be available. In this case the offer can, for example, comprise a proposal for a (monthly) payment which the organisation can then use to finance temporary replacement.

Finally, in this step 412 the processing unit 21 carries out a premium calculation to establish an insurance premium or guarantee sum commensurate with the offer and the risk factors linked to the indices. The processing unit 21 sends the details of the offer to the output means, for example printer 29. It is also possible for the offer to be sent electronically via the network 1, use being made, for example, of an e-mail address or fax address of the applicant organisation.

Furthermore, the offer is stored in an offer file DB3. In addition to the actual offer, the offer file DB3 can also contain all intermediate results from the previous steps 402-410.

Following issue of the offer the response from the applicant organisation is awaited.

In step 414, the processing unit 21 processes the response received from the applicant organisation to the offer. If the offer is accepted, the procedure is continued in step 418. In the case of rejection, the procedure continues in step 416.

In step 416, the processing unit 21 carries out an evaluation, in which all data and intermediate results from the offer file DB3 and from the first database DB1 are displayed. It is then possible (manually) to amend the offer, if necessary. Depending on the outcome of the evaluation, the processing unit 21 can exit the procedure 400 via path 417 in step 420 if a new offer is not calculated. A recalculation can also be desired, the processing unit 21, for example, continuing the procedure with adjusted data via path 419 in step 412. Both possibilities 417, 419 are indicated by means of dotted lines.

In step 418 the processing unit 21 stores the accepted offer in a guarantee agreement file DB4, from which the agreed insurance or guarantee conditions with regard to the applicant organisation can subsequently be retrieved. In DB4 the record for the applicant organisation preferably also contains all indices and intermediate results from the preceding steps 402-410.

The procedure 400 for the offer and acceptance phase ends in step 420.

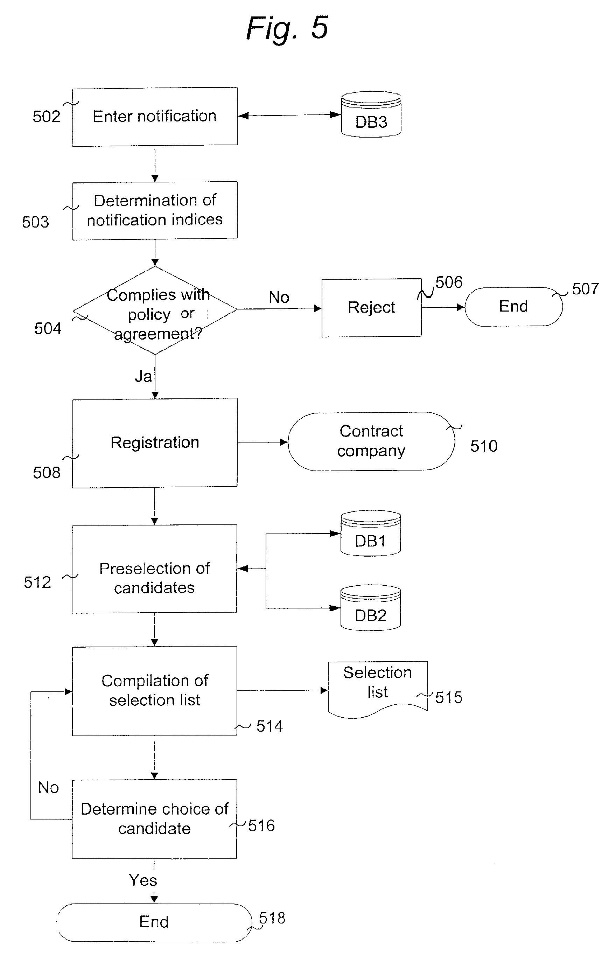

Figure 5 shows a diagrammatic flowchart for a method of the computer system according to the present invention during an implementation phase.

The procedure 500 shown in Figure 5 is carried out at the point in time when an organisation that has concluded an insurance/guarantee agreement at an earlier stage reports that the key worker to be replaced actually is unable to come into work. Prior to the notification an authorised physician has already established that the worker will not be able to work for a prolonged period or, because of death or permanent incapacity for work, will not return to work again.

In step 502, the notification is entered into the processing unit 21. During this step a number of administrative data, such as a code for the insurance/guarantee agreement, are entered. In addition, the (medical) details relating to the absence of the key worker are entered. The processing unit 21 stores the entered data in the memory means 18, 19, 22, 23, 24.

On the basis of these notification data, the processing unit 21 retrieves the application data and the agreement data relating to the notification from the databases DB1 and DB4. Preferably, the processing unit 21 retrieves the indices and intermediate results calculated in steps 402-410 of procedure 400.

In step 503, the processing unit 21 calculates indices for the medical data entered and the processing unit 21 compares these with the indices and intermediate results from the records for the applicant organisation stored in the databases DB1 and DB4.

In step 504, the processing unit 21 determines whether the notification meets the conditions contained in the agreement. If this is the case, the processing unit 21 continues by carrying out step 508. If the notification does not comply, the processing unit 21 continues by carrying out step 506.

In step 506, the processing unit compiles a document in which it is stated that the notification does not comply with the agreement drawn up previously. The document gives more details on the grounds for rejection. The procedure terminates in step 507.

In step 508, the processing unit 21 carries out registration of the notification. The notification data are, for example, passed on to an insurance company 510, or another implementing organisation, or are registered internally. For example, for this purpose an e-mail message can be sent to an e-mail address of the insurance company or the implementing organisation via the network 1, or a record can be added to a database (not shown) in which registration takes place. Other forms of data transfer are also possible.

In step 512, the processing unit 21 performs a routine to determine a preselection of candidates available at that point in time as temporary replacement, as well as the degree of their availability. (Whether there are suitable candidates has already been investigated in the offer and acceptance phase.) The processing unit 21 compares the profile characteristics D for the required temporary replacement in the record for the applicant organisation (in DB1) with the records of candidates available as temporary replacement in database DB2. The processing unit 21 adds details on selected candidates to a selection list.

In step 514, the processing unit 21 displays the selection list 515 on screen or paper. The selection list can optionally be sent in an electronic message to an e-mail address of the applicant organisation via the network 1. The processing unit 21 can also store the selection list 515 in a selection file (not shown).

The selection list 515 preferably displays the selected candidates in a predetermined order.

In step 516, the processing unit 21 provides a facility for selecting details of a candidate from the selection list 515.

When a selection has been made, the procedure terminates in step 518.

Finally, it is pointed out here that the processing unit 21 of the arrangement of the present invention preferably carries out regular calculations in the course of time to investigate whether the degree of probability that one or more candidates who match the profile (D) will be available as temporary replacement at a future point in time is still sufficiently high for each accepted insurance/guarantee agreement (stored in DB4). Because of changes in the number of available temporary candidates, the number of accepted insurance/guarantee agreements and the number of temporary replacements in employ at a given point in time, the coverage of risks will also be subject to change. It is therefore necessary to be able at any desired point in time to provide a report on the degree of coverage of the obligations entered into, that is to say the probability that, considered at a level of aggregation, one or more candidates will be available as temporary replacement at a future point in time.

To this end the processing unit of the arrangement will carry out the following steps:
a) for each key worker accepted by the insurance;
   - reading in the profile D stored in the agreement file for that insurance;
   - comparison, in accordance with predetermined rules, of the stored profile D with the second records in the second database DB2;
   - calculation, on the basis of the comparison, of the replacement index that indicates the degree of probability that one or more candidates who match the profile D will be available as temporary replacement at a future point in time; and then
b) at a level of aggregation, calculation and display of a degree of coverage index that indicates the extent to which the second records in the second database DB2 provide availability, at a future point in time, of candidates as temporary replacement at that level of aggregation.

Proactive monitoring is effected in this way: the value of the degree of coverage index establishes, at the level of aggregation, the current availability of candidates as temporary replacement. The level of aggregation that is considered can be, for example, a sector, a type of organisation or a type of worker, but, for example, also the type of insurance or guarantee agreement. On the basis of this index, an adjustment in the number of candidates included as potential temporary replacements in the second database can, for example, be made in order to ensure that the coverage for the obligations entered into (at that level of aggregation) is and remains adequate. By regularly proactively carrying out the calculations at a level of aggregation, it is possible to make adjustments should the coverage of risks be too low by increasing the number of available candidates in specific specialist fields or sectors by means of recruitment.

## Claims

1. Arrangement for supporting temporary replacement of a key worker, comprising a processing unit (21) and memory means (18, 19, 22, 23, 24), the processing unit (21) being connected to the memory means (18, 19, 22, 23, 24), **characterised in that**
the memory means (18, 19, 22, 23, 24) contain a first database (DB1) and a second database (DB2), which first database (DB1) contains first records containing first data on an organisation that wishes to take out insurance for supporting temporary replacement of the key worker, the first data at least comprising: a profile (D) for a temporary replacement for a worker to be insured, and which second database (DB2) contains second records containing second data on candidates available as temporary replacement; and
the processing unit (21) is equipped to carry out the following steps:
- comparing, in accordance with predetermined rules, the profile (D) with the second records in the second database (DB2);
- calculating, on the basis of the comparison, a replacement index that indicates the degree of probability that one or more candidates who match the profile (D) will be available as temporary replacement at a future point in time;
- depending on the value of the replacement index, determining whether the worker to be insured can be accepted for insurance for supporting temporary replacement of the key worker.

2. Arrangement according to Claim 1, **characterised in that**
the first data on the organisation that wishes to take out insurance for supporting temporary replacement of the key worker also contain personal and medical details (A) on the key worker to be insured, and
the processing unit (21) is equipped to carry out the following step:
- calculation of a health index for the key worker to be insured with the aid of the personal and medical data (A), which health index defines an insurance risk for the health of the key worker.

3. Arrangement according to Claim 1 or 2, **characterised in that**
the first data on the company that wishes to take out insurance for supporting temporary replacement of the key worker also contain business and economic data (B) on the organisation, and
the processing unit (21) is equipped to carry the following step:
- calculation of an organisation index for the organisation with the aid of the business and economic data (B), which organisation index defines an insurance risk for the business economic position of the organisation.

4. Arrangement according to Claim 3, **characterised in that** the processing unit (21) is equipped to carry out the following steps:
- establishment, with the aid of the replacement index, of whether acceptance for the insurance is possible,
- establishment, with the aid of the health index, of whether acceptance for the insurance is possible,
- establishment, with the aid of the organisation index, of whether acceptance for the insurance is possible.

5. Arrangement according to Claim 3, **characterised in that** the processing unit (21) is equipped to carry out the following step:
- establishment, with the aid of at least one of the replacement index, the organisation index and the health index, and the desired type of insurance (C), of an insurance premium for the insurance.

6. Arrangement according to Claim 1, **characterised in that** the processing unit (21) is equipped to carry out the following steps:
- for each key worker accepted for the insurance:
- reading in the profile (D) associated with the insurance and stored in the agreement file;
- comparison, in accordance with predetermined rules, of the stored profile with the second records in the second database (DB2);
- calculation, on the basis of the comparison, of a replacement index that indicates the degree of probability that one or more candidates who match the profile (D) will be available as temporary replacement at a future point in time; and then
- at a level of aggregation, calculating and displaying a coverage index that indicates the extent to which the second records in the second database (DB2) provide availability, at a future point in time, of candidates as temporary replacement at that level of aggregation.

7. Arrangement according to Claim 1, **characterised in that** the processing unit (21) is equipped to carry out the following steps:
- input of a sick note from a key worker to be insured, containing medical report data relating to the nature of the illness;
- comparison of the medical report data with agreement conditions stored earlier at the time of acceptance, a calculation being carried out to determine whether the sick note falls within the agreement conditions,
- compilation of a best match selection list (515) of candidates available as temporary replacement who fit the profile (D) for a temporary replacement for the key worker to be insured, by comparing the profile (D) with the second records in the second database (DB2) and selecting matching second records.

8. Method for supporting temporary replacement of a key worker, to be carried out by an arrangement according to Claim 1, **characterised in that**
a first database (DB1) contains first records containing first data on an organisation that wishes to take out insurance for supporting temporary replacement of a key worker, the first data at least comprising: a profile (D) for a temporary replacement for a key worker to be insured, and a second database (DB2) contains second records containing second data on candidates available as temporary replacement; and
the method comprises the following steps:
- comparing, in accordance with predetermined rules, the profile (D) with the second records in the second database (DB2);
- calculating, on the basis of the comparison, a replacement index that indicates the degree of probability that one or more candidates who match the profile (D) will be available as temporary replacement at a future point in time;
- depending on the value of the replacement index, determining whether the worker to be insured can be accepted for insurance for supporting temporary replacement of a key worker.

9. Computer program for supporting temporary replacement of a key worker, to be implemented by an arrangement according to Claim 1, that, when the program has been loaded in the memory means (18, 19, 22, 23, 24) of the arrangement, enables the processing unit (21) to support temporary replacement of a key worker, **characterised in that**
the memory means (18, 19, 22, 23, 24) contain a first database (DB1) and a second database (DB2), which first database (DB1) contains first records containing first data on an organisation that wishes to take out insurance for supporting temporary replacement of a key worker, the first data at least comprising: a profile (D) for a temporary replacement for a key worker to be insured, and which second database (DB2) contains second records containing second data on candidates available as temporary replacement; and
the processing unit (21) carries out the following steps:
- comparing, in accordance with predetermined rules, the profile (D) with the second records in the second database (DB2);
- calculating, on the basis of the comparison, a replacement index that indicates the degree of probability that one or more candidates who match the profile (D) will be available as temporary replacement at a future point in time;
- depending on the value of the replacement index, determining whether the worker to be insured can be accepted for insurance for supporting temporary replacement of the key worker.

10. Data carrier provided with the computer program according to Claim 9.
